# EUROPÄISCHE PATENTSCHRIFT

(11) **EP 2 600 100 B1**
(45) Veröffentlichungstag und Bekanntmachung des Hinweises auf die Patenterteilung: **10.01.2018**
(21) Anmeldenummer: 12192451.8
(22) Anmeldetag: 13.11.2012
(51) Int. Cl.: G01B 11/02, G01B 11/06

(54) **Vorrichtung und ein Verfahren zur Abstands- oder Dickenmessung eines Objekts**
Device and method for measuring the distance or thickness of an object
Dispositif et procédé de mesure de la distance ou de l'épaisseur d'un objet

(30) Priorität: 30.11.2011 DE 102011087463; 02.03.2012 DE 102012203315
(43) Veröffentlichungstag der Anmeldung: 05.06.2013
(73) Patentinhaber: MICRO-EPSILON Messtechnik GmbH & Co. KG, 94496 Ortenburg (DE)
(72) Erfinder: Höhne, Marcus, 94535 Eging am See (DE)
(74) Vertreter: Patent- und Rechtsanwälte Ullrich & Naumann

(56) Entgegenhaltungen:
- WO-A1-2010/150003
- US-A1- 2005 248 773
- US-A1- 2005 280 834
- US-A1- 2006 139 656
- US-B2- 7 889 342

## Beschreibung

Die Erfindung betrifft eine Vorrichtung und ein Verfahren zur Abstands- oder Dickenmessung eines Objekts, mit mindestens zwei optischen Abstandssensoren, die zur Emission von Licht einer Lichtquelle ausgebildet sind und denen ein Empfänger für vom Objekt reflektiertes Licht zugeordnet ist, wobei eine Abstands- oder Dickenbestimmung anhand der durch die Abstandssensoren ermittelten Abstände zwischen den Abstandssensoren und dem Objekt erfolgt.

Die Messung der Dicke eines Objekts wird häufig mittels Abstandssensoren realisiert, indem der Abstand von gegenüberliegenden Seiten - bspw. Ober- und Unterseite oder Vorder- und Rückseite - des Objekts relativ zu einem oder mehreren Sensoren ermittelt wird. Im Folgenden wird der Einfachheit halber lediglich von Ober- und Unterseite eines Objekts die Rede sein.

Aus der Differenz der Abstandsmesswerte für die Oberseite und die Unterseite kann die Dicke des Objekts bestimmt werden. Dabei unterscheidet man einseitige oder zweiseitige Dickenmessung. Bei der einseitigen Dickenmessung wird nur ein Sensor verwendet, der von einer Seite aus die Dicke des Objekts erfasst. Dazu muss jeweils ein Messwert von der Oberseite und der Unterseite ermittelt werden. Mit einem Sensor gelingt dies dann, wenn das Objekt für das vom Sensor verwendete Messprinzip zumindest teilweise durchlässig ist und sowohl von der Oberseite als auch von der Unterseite ein Messsignal erzeugt wird, das vom Abstandssensor detektiert werden kann. Bei der beidseitigen Dickenmessung werden zwei einander gegenüberliegende Sensoren verwendet, die jeweils den Abstand zur Ober- und Unterseite eines dazwischenliegenden Objekts erfassen. Aus der Differenz der Messsignale kann - bei bekanntem Abstand der Sensoren zueinander - wiederum die Dicke des Objekts bestimmt werden.

Häufig werden für die Dickenmessung optische Abstandssensoren eingesetzt, da diese nahezu unabhängig vom Objektmaterial arbeiten und sehr präzise Messwerte liefern. Besonders hochauflösende optische Sensoren sind konfokale Messsysteme. Dazu zählen bspw. konfokal chromatische Sensoren und konfokale Weißlicht-Interferometer, die mit polychromatischem Licht arbeiten. Bei diesen Sensoren wird polychromatisches - weißes - Licht verwendet, um eine genaue Abstandsinformation vom Messobjekt relativ zum Sensor zu erhalten. Bspw. verwenden konfokale Laser-Scanning-Mikroskope die mechanische Fokusverschiebung von monochromatischem Laserlicht zur präzisen Abstandsmessung.

Bei Abstands-Messsystemen, die nach dem konfokal chromatischen Prinzip arbeiten, wird breitbandiges Licht (weißes Licht) mittels optischer Elemente, die eine große chromatische Aberration aufweisen, auf das zu erfassende Objekt gerichtet. Der Lichtpunkt, der auf der Oberfläche entsteht, wird von derselben Optik über einen Strahlteiler auf ein Spektrometer abgebildet. Vor dem Spektrometer sitzt eine Blende, so dass nur Licht auf das Spektrometer abgebildet wird, das auf dem Objekt eng fokussiert ist. Durch die chromatische Aberration wird das Licht abhängig von der Wellenlänge bei unterschiedlichen Abständen vom Sensor fokussiert. Im Spektrometer wird die Wellenlänge des fokussierten Lichts bestimmt, woraus der Abstand zum Objekt sehr genau bestimmt werden kann. In gängigen Spektrometern für derartige Messsysteme wird das Licht mittels eines diffraktiven Elements abhängig von der Wellenlänge unterschiedlich stark abgelenkt und auf eine photoelektrische Zeile abgebildet. Durch den Ort, wo das Licht auf die Zeile trifft, kann die Wellenlänge des Lichts bestimmt werden. Übliche Zeilen sind CCD- oder CMOS -Zeilen. Mit derartigen Messsystemen kann somit eine Abstandsmessung an einer Messstelle realisiert werden.

Bei einer Messung an transparenten Objekten wie beispielsweise Glas erhält man zusätzlich zu der Reflexion von der Oberfläche weitere Reflexionen einer fokussierten Wellenlänge jeweils beim Übergang von einem Medium zu einem anderen Medium mit unterschiedlichem Brechungsindex.

Mit konfokalen Messsystemen kann daher bei transparenten Objekten die Dicke mit nur einem Sensor von einer Seite aus gemessen werden. Da das Licht in das Objekt zumindest teilweise eindringt, detektiert der Sensor ein Messsignal sowohl von der Ober- als auch von der Unterseite des Objekts. Voraussetzung für eine zuverlässige Messung ist hierbei, dass das Objekt eine bestimmte Dicke nicht über- oder unterschreitet und dass der Brechungsindex des Objekts bekannt ist. Da jedoch der Brechungsindex im Allgemeinen von der Wellenlänge abhängig ist, ist eine einseitige Dickenmessung häufig mit Fehlern behaftet, da der Brechungsindex für das Objekt im verwendeten Spektralbereich häufig nicht bekannt ist oder eine Berechnung der Dicke damit zu aufwändig ist.

Besonders ist dies der Fall, wenn mehrschichtige Objekte aus verschiedenen Materialien gemessen werden sollen, bspw. Verbundglasscheiben oder Windschutzscheiben von Kraftfahrzeugen. Bei mehreren derartigen Schichten muss für eine präzise Dickenmessung der wellenlängenabhängige Brechungsindex für alle Schichten bekannt und konstant sein. Dies ist in der Praxis häufig jedoch nicht der Fall.

Die einseitige Dickenmessung mit konfokalen Messsystemen von im Verhältnis zum Messbereich besonders dünnen Objekten ist ebenfalls unterhalb einer Mindestdicke nicht mehr möglich. Dies liegt daran, dass im Messsystem die Signale von Ober- und Unterseite nicht mehr zuverlässig voneinander getrennt werden können, so dass eine Dickenberechnung verhindert wird. Dies ist bei konfokal chromatischen Sensoren bspw. bei einer Dicke der Fall, die unter 10% des Messbereichs des Sensors liegt. Dann kann das Spektrometer des Sensors, das auf einen bestimmten Messbereich abgeglichen ist, die nahe beieinanderliegenden Peaks von Ober- und Unterseite des Objekts nicht mehr zuverlässig voneinander trennen.

Die Dickenmessung von nicht oder nur ungenügend transparenten Objekten von einer Seite aus ist ebenfalls prinzipbedingt nicht möglich, da das vom Sensor emittierte Licht nicht oder nur in ungenügendem Maß bis zur dem Sensor abgewandten Seite des Objekts - durch das Objekt hindurch - gelangen kann.

Daher wird für Objekte, die nicht transparent sind oder eine zu große oder zu geringe Dicke aufweisen oder aus den oben genannten Gründen für eine einseitige Messung ungeeignet sind, eine beidseitige Dickenmessung durchgeführt. Dazu werden zwei Abstandssensoren einander gegenüberliegend angeordnet, wobei das Objekt zwischen den Sensoren liegt. Um Fehler durch Verkippung des Objekts zu vermeiden, ist es erforderlich, dass die Sensoren exakt ausgerichtet sind, so dass nämlich die Messpunkte jeweils fluchtend auf einer Verbindungsgeraden zwischen den beiden Sensoren liegen.

Aus der US 7 889 342 B2 sind eine Vorrichtung und ein Verfahren zur Dickenmessung eines Objekts bekannt, wobei die Vorrichtung zwei optische Abstandssensoren aufweist, die zur Emission von Licht einer Lichtquelle ausgebildet sind und denen ein Empfänger für vom Objekt reflektiertes Licht zugeordnet ist. Eine Dickenbestimmung des Objekts erfolgt anhand der durch die Abstandssensoren ermittelten Abstände zwischen den Abstandssensoren und dem Objekt. Im Konkreten werden hierbei zwei konfokal chromatische Abstandssensoren zur Messung der Dicke von Papier eingesetzt.

Bei der bekannten Vorrichtung und bei dem bekannten Verfahren ist problematisch, dass insbesondere bei dünnen und/oder transparenten Objekten emittiertes Licht von einem Sensor in den anderen Sensor gelangen kann. Dies ist bei einander gegenüberliegenden und exakt ausgerichteten Abstandssensoren besonders problematisch, wobei die Dickenmessung des einen Sensors durch das emittierte Licht des anderen Sensors gestört oder bei besonders transparenten Objekten sogar unmöglich gemacht wird.

Als problematische Objekte gelten hierbei Glas, klare oder sehr dünne Kunststofffolien oder auch sehr dünnes Papier.

Die gegenseitige Beeinflussung von zwei oder mehreren Sensoren tritt jedoch nicht nur bei der Dickenmessung auf. Auch bei Mehrstellen-Messanlagen, bspw. bei Messungen des Abstands von den Sensoren zu einem Objekt, können sich Sensoren gegenseitig beeinflussen, indem Licht eines Sensors in den andern Sensor gelangt.

Im Stand der Technik wird dieses Problem teilweise dadurch gelöst, dass mehrere Sensoren einem Messsystem zugeordnet sind, d.h. dass ein Mehrkanal-Messsystem aufgebaut wird. Darin werden optische Schalter eingesetzt, die zwischen den einzelnen Sensoren hin- und herschalten. Dabei wird im Messsystem das Licht für zwei oder mehrere Sensoren über einen optischen Schalter umgeschaltet, so dass zur selben Zeit jeweils nur ein Sensor auf der Zeile des Spektrometers abgebildet wird. Außerdem muss sichergestellt sein, dass bei dem jeweils ausgewerteten Sensor die zugehörigen Linearisierungs- und Korrekturwerte verwendet werden, was mittels entsprechender Software realisiert wird.

Damit wäre eine Mehrstellen-Messung an verschiedenen Stellen desselben Objektes oder aber an verschiedenen Objekten möglich. Insbesondere könnte damit auch eine Dickenmessung mit zwei jeweils gegenüberliegenden Sensoren realisiert werden.

Allerdings ist die Verwendung eines Mehrfach-Systems mit optischer Umschaltung problematisch. Dieses bekannte Verfahren ist insofern nachteilig, da die Schaltgeschwindigkeit wesentlich geringer ist als die verfügbare Messgeschwindigkeit. Übliche Messfrequenzen von konfokal chromatischen Messsystemen liegen im kHz-Bereich, während die Umschaltzeiten im Bereich von wenigen Hz bis ca. 50 Hz liegen. Darüber hinaus führen die zusätzlich notwendigen optischen Bauteile zu höheren Kosten und erhöhen die Fehleranfälligkeit. Ein weiterer gravierender Nachteil ist der zeitliche Versatz bei der Auswertung der einzelnen Sensoren. Durch das Umschalten zwischen den Sensoren liegen die Messsignale der Sensoren nacheinander vor. Eine gleichzeitige Messung ist damit nicht möglich. Dies wirkt sich stark bei schnell bewegten Objekten und insbesondere bei einer Dickenmessung mit gegenüberliegend angeordneten Sensoren aus, da sich je nach Schaltgeschwindigkeit und Geschwindigkeit des Messobjekts entsprechend große Positionsabweichungen der Messpunkte der einzelnen Sensoren ergeben. Aus der WO 2010/150003 A1 sind eine Vorrichtung und ein Verfahren zur Dickenmessung eines Objektes bekannt, wobei die Vorrichtung zwei optische Abstandssensoren aufweist. Zur Vermeidung von Interferenzeffekten offenbart dieses Dokument die Möglichkeit eines Versatzes der von den Abstandssensoren emittierten Messstrahlen. Alternativ zu einem Versatz der Messstrahlen können die Messstrahlen eine unterschiedliche Polarisationsebene aufweisen.

Der vorliegenden Erfindung liegt daher die Aufgabe zugrunde, eine Vorrichtung und ein Verfahren zur Abstands- oder Dickenmessung eines Objekts anzugeben, wonach eine sichere Messung der Dicke auch transparenter Objekte oder des Abstands zwischen den Abstandssensoren und einem Objekt mit konstruktiv einfachen Mitteln ermöglicht ist.

Die voranstehende Aufgabe wird einerseits durch eine Vorrichtung zur Abstands- oder Dickenmessung eines Objekts mit den Merkmalen des Anspruchs 1 gelöst. Danach ist die Vorrichtung derart ausgestaltet und weitergebildet, dass die Abstandssensoren derart ausgebildet sind oder derartige Mittel aufweisen, dass von den Abstandssensoren emittiertes Licht nicht oder nur abgeschwächt auf den Empfänger des jeweils anderen Abstandssensors gelangt oder nicht oder nur abgeschwächt von diesem Empfänger verarbeitet wird, wobei die Mittel derart ausgebildet sind, dass das durch die Abstandssensoren emittierte Licht durch die Mittel derart spektral aufgespalten oder aufgeteilt wird, dass höchstens ein Teilbereich des Wellenlängenspektrums des von einem Abstandssensor emittierten Lichts auf den Empfänger des jeweils anderen Abstandssensors gelangt. Zum anderen wird die voranstehende Aufgabe durch ein Verfahren mit den Merkmalen des Anspruchs 11 gelöst. Danach ist das Verfahren derart ausgestaltet und weitergebildet, dass von den Abstandssensoren emittiertes Licht nicht oder nur abgeschwächt auf den Empfänger des jeweils anderen Abstandssensors geführt oder nicht oder nur abgeschwächt von diesem Empfänger verarbeitet wird.

In erfindungsgemäßer Weise ist zunächst erkannt worden, dass es bspw. auch bei einer Vorrichtung und einem Verfahren zur Dickenmessung, wobei zwei Abstandssensoren einander gegenüberliegend angeordnet sind, möglich ist, eine sichere Messung der Dicke auch transparenter Objekte zu realisieren. Hierzu sind im Konkreten die Abstandssensoren derart ausgebildet oder weisen die Abstandssensoren derartige Mittel auf, dass von den Abstandssensoren emittiertes Licht nicht oder nur abgeschwächt auf den Empfänger des jeweils anderen Abstandssensors gelangt oder nicht oder nur abgeschwächt von diesem Empfänger verarbeitet wird, wobei die Mittel derart ausgebildet sind, dass das durch die Abstandssensoren emittierte Licht durch die Mittel derart spektral aufgespalten oder aufgeteilt wird, dass höchstens ein Teilbereich des Wellenlängenspektrums des von einem Abstandssensor emittierten Lichts auf den Empfänger des jeweils anderen Abstandssensors gelangt. Durch die erfindungsgemäße Ausbildung der Abstandssensoren wird eine gegenseitige Beeinflussung der Abstandssensoren bei einer Abstands- oder Dickenmessung wesentlich reduziert oder gar verhindert. Dabei ist es ermöglicht, dass die Abstandssensoren die für die Messung erforderlichen Reflexionssignale vom zu messenden Objekt sehr sicher detektieren und verarbeiten können.

An dieser Stelle sei bemerkt, dass unter dem Begriff des Abschwächens des Lichts eine Intensitätsreduzierung und/oder eine Verkleinerung des Wellenlängenspektrums des Lichts verstanden wird. Beide zuletzt genannten Möglichkeiten führen jeweils für sich alleine oder in Kombination miteinander zu der oben genannten Abschwächung des Lichts.

Folglich ist mit der erfindungsgemäßen Vorrichtung und mit dem erfindungsgemäßen Verfahren eine sichere Messung der Dicke auch transparenter Objekte oder des Abstands zwischen den Abstandssensoren und einem Objekt mit konstruktiv einfachen Mitteln ermöglicht.

Bei einer bevorzugten Ausgestaltung der Vorrichtung könnten die Abstandssensoren jeweils eine Lichtquelle zur Emission von Licht und jeweils einen Empfänger für vom Objekt reflektiertes Licht aufweisen. Insbesondere bei einer Dickenmessung könnten die Abstandssensoren auf zwei Seiten des Objekts - einander gegenüberliegend - angeordnet sein.

In konkreter und einfacher Weise sind die Mittel derart ausgebildet, dass das durch die Abstandssensoren emittierte Licht durch die Mittel derart spektral aufgespalten oder aufgeteilt wird, dass höchstens ein Teilbereich des Wellenlängenspektrums des von einem Abstandssensors emittierten Lichts auf den Empfänger des jeweils anderen Abstandssensors gelangt oder höchstens ein derartiger Teilbereich zur Auswertung herangezogen wird, wobei sich die Teilbereiche der Sensoren nicht oder nur geringfügig überlappen. Insoweit könnten sich die Abstandssensoren ein insgesamt zur Verfügung stehendes Wellenlängenspektrum teilen und jeweils Messungen in demjenigen Teil des Wellenlängenspektrums durchführen, das vom anderen Abstandssensor zwar emittiert wird, aber nicht auf den einen Abstandssensor gelangt.

Um eine gegenseitige Beeinflussung der Sensoren zu minimieren, ist es erforderlich, dass das Licht eines Sensors nicht in den jeweils anderen Sensor gelangt. Genauer gesagt, darf das von einem Sensor ausgestrahlte Licht nicht oder nur sehr abgeschwächt auf den Empfänger für den anderen Sensor gelangen.

In der Praxis könnte man bei Verwendung von gleichen Abstandssensoren, d.h. Abstandssensoren mit demselben Messbereich, die spektrale Verteilung derart wählen, dass jedem Abstandssensor in etwa die Hälfte des Bereichs zugeordnet ist. Dabei könnte in vorteilhafter Weise in jedem Abstandssensor ein etwa gleich großer Bereich genutzt werden. In besonders vorteilhafter Weise könnte die spektrale Aufspaltung oder Aufteilung derart realisiert sein, dass bei jedem Abstandssensor ein in etwa gleich großer Abstands- oder Dickenmessbereich nutzbar ist. Insoweit könnte eine quasi Gleichwertigkeit der Abstandssensoren im Hinblick auf den nutzbaren Dickenmessbereich realisiert sein.

Bei Verwendung von Abstandssensoren mit unterschiedlichem Messbereich könnte man die Verteilung so wählen, dass bei jedem Abstandssensor idealerweise der halbe zur Verfügung stehende Messbereich genutzt wird. Jedoch sind auch andere Aufteilungen möglich, wobei auf den individuellen Anwendungsfall abgestellt werden kann.

Grundsätzlich könnte eine Aufteilung des Spektralbereichs an der Stelle des Empfängers erfolgen. In besonders einfacher Weise könnte eine Empfangszeile, vorzugsweise eine CCD- oder CMOS-Zeile, des Empfängers bereichsweise maskiert sein. Insbesondere bei konfokal chromatischen Abstandssensoren könnte bspw. die Empfangszeile nach dem dispersiven Element des Spektrometers maskiert sein. In weiter besonders einfacher Weise könnte die Maskierung mittels einer Blende realisiert sein. Eine derartige Maskierung durch ein Abblenden mittels einer Blende blendet einen Teil des Spektrums aus. Im Konkreten könnte ein empfangenes, polychromatisches Licht durch das dispersive Element, bspw. ein Prisma oder ein Beugungsgitter, in seine spektralen Anteile zerlegt werden. Das Spektrum wird anschließend auf eine Empfangszeile projiziert. Deckt man nun mittels einer Blende einen Teilbereich des Spektrums ab, so dass dieser nicht auf die Empfangszeile gelangt, kann damit verhindert werden, dass Licht vom gegenüberliegenden Abstandssensor auf die Empfangszeile gelangt und diese störend beeinflusst.

Alternativ zu einer derartigen Maskierung mittels einer Blende könnte auch eine elektronische Maskierung erfolgen, wobei mindestens ein Pixel in einem vorgebbaren Bereich einer Empfangszeile, vorzugsweise eine CCD- oder eine CMOS-Zeile, des Empfängers deaktiviert oder nicht zu einer Verarbeitung oder Auswertung herangezogen werden könnte. Hierdurch könnte eine quasi softwaretechnische oder elektronische Maskierung realisiert sein.

Alternativ zu einem als bspw. Blende realisierten Mittel könnte eine Empfangszeile, vorzugsweise eine CCD- oder CMOS-Zeile, des Empfängers derart innerhalb des Empfängers verschiebbar oder anordenbar sein, dass das von einem dispersiven Element aufgespaltene oder aufgeteilte Licht nur auf einen Teilbereich der Empfangszeile gelangt. Dies stellt eine weitere konstruktiv einfache Ausgestaltung dar, die eine Beeinflussung durch vom gegenüberliegenden Abstandssensor emittiertes Licht verringert. Dabei könnte die Empfangszeile innerhalb des Empfängers oder Spektrometers derart verschoben werden oder angeordnet sein, dass das vom dispersiven Element auf die Empfangszeile projizierte Licht nur auf eine Hälfte der Empfangszeile trifft. Im Prinzip entspricht dies dem vorher beschriebenen Maskieren mittels einer Blende oder mittels softwaretechnischer Maßnahmen, wobei jedoch die Empfangszeile hier selbst geeignet angeordnet wird.

In alternativer und weiter vorteilhafter Weise könnte eine Ausgestaltung der Abstandssensoren oder eine Zuordnung von geeigneten Mitteln zu den Abstandssensoren im Bereich der Lichtquelle des jeweiligen Abstandssensors erfolgen. Im Konkreten könnten auf besonders einfache Weise die Abstandssensoren unterschiedliche Lichtquellen aufweisen, die jeweils Licht unterschiedlicher Wellenlänge oder Wellenlängenbereiche emittieren. Dabei könnten die unterschiedlichen Lichtquellen jeweils Licht für ihren eigenen Betrieb emittieren, das der jeweils gegenüberliegende Abstandssensor gerade nicht für dessen Betrieb verwendet und/oder für das der gegenüberliegende Abstandssensor unempfindlich ist. Mit anderen Worten könnten Lichtquellen verwendet werden, die jeweils einen anderen Bereich des Wellenlängenspektrums zur Verfügung stellen. Bei konventionellen Glühlampen, Halogen- oder auch Entladungslampen ist dies schwierig zu realisieren. Mit geeigneten LED-Lampen kann jedoch der Spektralbereich in engen Grenzen ausgewählt werden. Dies gilt insbesondere für LEDs, die polychromatisches Licht durch Konversion in Lumineszenzfarbstoffen erzeugen. Durch geeignete Wahl dieser Fotolumineszenz kann ein bestimmter Spektralbereich ausgewählt werden.

Dabei könnten die Abstandssensoren jeweils verschieden maskiert werden. Bei der Betrachtung von zwei Abstandssensoren könnte bspw. im einen Abstandssensor der kurzwelligere Bereich des Spektrums genutzt werden, während dann gerade dieser Bereich im anderen Abstandssensor ausgeblendet und stattdessen der langwelligere Bereich verwendet wird. In besonders vorteilhafter Weise könnten diese beiden Bereiche unmittelbar aneinander angrenzen, damit ein gesamter zur Verfügung stehender Spektralbereich möglichst optimal genutzt wird.

In konstruktiv besonders einfacher Weise könnten dabei die Mittel durch mindestens einen den Lichtquellen oder einem lichtleitenden Element der Abstandssensoren zugeordneten, vorzugsweise unmittelbar vor der Austrittsoptik der Abstandssensoren angeordneten, Spektral-, Kanten- und/oder Bandpassfilter realisiert sein. Bei der Auswahl der konkreten Zuordnungsposition und des konkreten Filtertyps kann in vorteilhafter Weise auf den jeweiligen Anwendungsfall abgestellt werden. Wird bspw. eine breitbandige Lichtquelle verwendet, könnte mit einem Kantenfilter ein Teil des Spektrums ausgeblendet werden. Der Filter könnte bereits direkt an der Lichtquelle oder an einem lichtleitenden Element innerhalb des Abstandssensors angeordnet werden.

Ein Großteil der zuletzt genannten Ausführungsformen erfordern eine konstruktive Änderung der Abstandssensoren selbst. Damit können die Abstandssensoren in besonders geeigneter Weise an die zu nutzenden Bereiche des Spektrums angepasst und vorkonfektioniert werden. Besonders einfach und kostengünstig könnte eine Aufteilung des zur Verfügung stehenden Spektralbereichs jedoch realisiert werden, wenn ein Filter unmittelbar vor der Austrittsoptik des Abstandssensors angeordnet wird. Dies ist dann auch nachträglich und ohne Modifikation oder konstruktive Änderung der Abstandssensoren selbst möglich.

Insbesondere bei einer Abstandsmessung könnten die Abstandssensoren nebeneinander angeordnet sein, wobei vorzugsweise das Licht der Lichtquelle auf alle Abstandssensoren verteilt ist.

In einer besonders vorteilhaften Ausführung können mehrere Sensoren an nur einem Messsystem betrieben werden, indem das von der Lichtquelle ausgesandte Licht über einen Strahlteiler auf beispielsweise zwei Sensoren aufgeteilt und von diesen auf das Messobjekt projiziert wird. Das vom Messobjekt zurückreflektierte Licht wird wiederum über den Strahlteiler auf das Spektrometer abgebildet. Als Strahlteiler könnte beispielsweise ein halbdurchlässiger Spiegel oder ein PrismenStrahlteiler verwendet werden. Um nun eine gegenseitige Beeinflussung zu vermeiden, wird der Spektralbereich jedes Sensors aufgeteilt, indem Filter in den Strahlengang gebracht werden. Die Aufteilung des Spektralbereiches geschieht in ganz analoger Weise derart, dass beispielsweise jedem Sensor die Hälfte zugeteilt wird. Aber auch jede beliebige andere Aufteilung ist vorstellbar. Damit ist sichergestellt, dass für den jeweiligen Sensor nur Licht in dem Teilbereich des Spektrums auf die Zeile des Spektrometers trifft. Somit können mit nur einem Spektrometer mehrere Sensoren gleichzeitig ausgewertet werden. Das Signal jedes Sensors steht also auf der Zeile gleichzeitig zur Verfügung. Die Zeile wird sozusagen aufgeteilt, indem jedem Sensor ein Teilbereich zugeordnet wird. Die Auswertung der Zeile erfolgt jedoch - wie bei einem Einkanalsystem auch - gleichzeitig. Dadurch können Signale mehrerer Sensoren gleichzeitig verarbeitet werden, so dass speziell bei der Dickenmessung oder bei schnell bewegten Objekten kein zeitlicher und damit auch räumlicher Versatz zwischen den Messungen bzw. den Messstellen am Objekt entsteht.

Die Filter können vor dem jeweiligen Sensor angebracht werden, oder auch vor dem Messsystem im Lichtleiter, oder innerhalb des Messsystems vor dem Spektrometer.

Die Erfindung umfasst eine Vorrichtung und ein Verfahren der Abstands- oder Dickenmessung vorzugsweise mittels konfokal chromatischer Messsysteme, wobei mehrere Sensoren von getrennten (Einzel-) Messsystemen oder innerhalb eines Mehrkanal-Messystems gleichzeitig zur Auswertung gelangen, ohne dass eine gegenseitig Beeinflussung stattfindet.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1a und 1b: in einem Diagramm jeweils die Transmissionskurve eines Cyan-Filters und eines Rot-Filters in Abhängigkeit von der Wellenlänge,
- Fig. 2: in einer schematischen Darstellung ein Ausführungsbeispiel einer erfindungsgemäßen Vorrichtung zur Abstands- oder Dickenmessung eines Objekts,
- Fig. 3a bis 3d: in jeweils einem Diagramm ein gemessenes Spektrum ohne und mit Kantenfilter mittels jeweils des einen und des anderen Abstandssensors,
- Fig. 4: in einer schematischen Darstellung wellenlängenabhängige Fokuslagen von Abstandssensoren einer Vorrichtung mit gegenüberliegend angeordneten Abstandssensoren und
- Fig.5: in einer schematischen Darstellung ein weiteres Ausführungsbeispiel einer erfindungsgemäßen Vorrichtung zur Abstands- oder Dickenmessung, wobei hier eine zweikanalige Ausführung gezeigt ist.

Im Folgenden werden eine Vorrichtung und ein Verfahren zur Dickenmessung eines Objekts näher erläutert, wobei eine beidseitige Dickenmessung eines dünnen oder transparenten Objekts mittels optischer Abstandssensoren - im Folgenden kurz Sensoren - beschrieben wird. Dabei können nicht nur punktuell messende konfokale Sensoren, sondern auch konfokale Scanner verwendet werden.

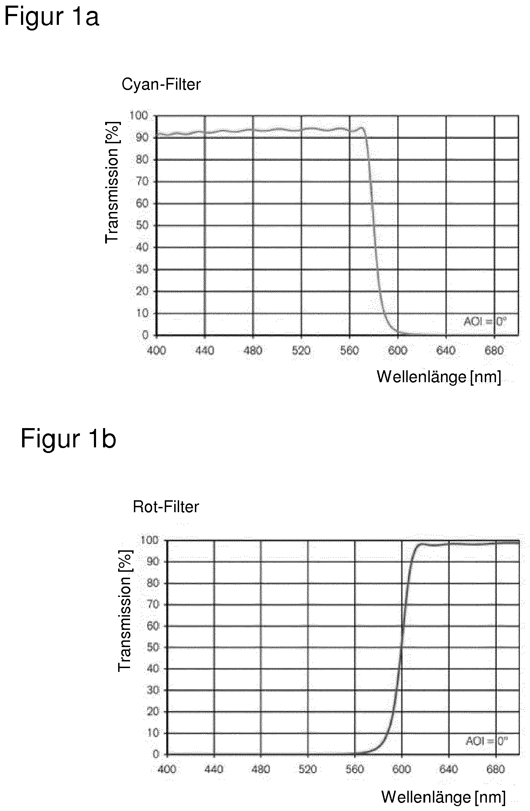

Nachfolgend wird nun zunächst das Prinzip der spektralen Aufteilung mittels Filter erläutert. Hierbei wird in den Strahlengang beider Sensoren jeweils ein optischer Kantenfilter eingebracht. Die Kantenfilter sind derart ausgelegt, dass bei den gegenüberliegend angeordneten Sensoren jeweils derjenige Teil des verwendeten Spektrums geblockt wird, der von dem anderen Sensor zur Messung genutzt wird. Die in den Fig. 1a und 1b gezeigten Transmissionskurven beispielhaft verwendeter Cyan- und Rot-Filter sind dabei möglichst komplementär auszulegen. Dabei wirkt ein Filter- der Cyan-Filter- als Kurzpassfilter, der für Licht unterhalb seiner Cut-Off-Wellenlänge transparent ist, während der andere Filter - der Rot-Filter - als Langpassfilter wirkt, der oberhalb seiner Cut-On-Wellenlänge transparent ist. Da optische Filter keine ideale Filterwirkung aufweisen, gibt die Cut-Off/Cut-On-Wellenlänge immer denjenigen Wert an, bei dem die Transmission bei 50% liegt. Das bedeutet aber auch, dass auch unterhalb der Cut-On-Wellenlänge bzw. oberhalb der Cut-Off-Wellenlänge noch Licht transmittiert wird. Daher ist es zweckmäßig, die Cut-On/Cut-Off-Wellenlängen so zu wählen, dass ein Überlapp möglichst vermieden wird. Anstelle von Kantenfiltern könnten auch Bandpassfilter mit geeigneten Durchlasskurven eingesetzt werden.

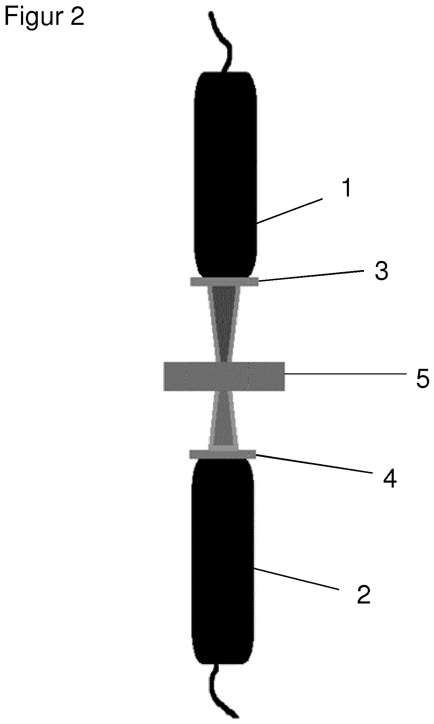

Die Kantenfilter gemäß den Fig. 1a und 1b sind beispielhaft bei dem in Fig. 2 schematisch dargestellten Ausführungsbeispiel einer erfindungsgemäßen Vorrichtung zur Dickenmessung eines Objekts eingesetzt. Dabei sind Sensoren 1 und 2 einander gegenüberliegend angeordnet, wobei vor dem Sensor 1 ein Cyan-Filter 3 und vor dem Sensor 2 ein Rot-Filter 4 angeordnet ist. Das zu messende Objekt wird durch eine Glasplatte 5 gebildet.

Bei dem Sensor 1 wird der Bereich von Wellenlängen oberhalb von 600 nm gemäß Fig. 1a nahezu vollständig geblockt, während bei dem Sensor 2 der Bereich unterhalb von 570 nm gemäß Fig. 1b nahezu vollständig geblockt wird. Damit ist eine gegenseitige Beeinflussung weitgehend ausgeschlossen. Das bedeutet, dass der Sensor 1 mit dem verbleibenden Spektrum von ca. 450 nm bis ca. 570 nm arbeitet. Genau dieser Bereich wird durch den Kantenfilter von Sensor 2 geblockt, was eine Überlagerung verhindert. Der Sensor 2 arbeitet also im verbleibenden Spektralbereich von ca. 570 nm bis ca. 690 nm.

Die beiden Sensoren 1, 2 können unter Berücksichtigung des zur Verfügung stehenden Spektralbereichs bereits beim Abgleich auf diesen Bereich optimiert werden. Der Spektralbereich kann innerhalb des für die Abstandsmessung genutzten Bereichs - normalerweise der Bereich zwischen 400 nm und 900 nm - je nach Anforderung zwischen den Sensoren 1, 2 aufgeteilt werden. In der Regel bedeutet ein großer Spektralbereich auch einen größeren Messbereich für den einzelnen Sensor 1,2.

Da durch die Filter 3 und 4 jeweils ein Bereich des von den Sensoren 1, 2 üblicherweise verwendeten Spektrums geblockt wird, wird dadurch der Messbereich der Sensoren 1, 2 eingeschränkt. Bei einem Sensor wird der Anfang des Messbereichs und beim anderen Sensor das Ende des Messbereichs verschoben. Daher muss für die Dickenmessung die Anordnung der Sensoren 1, 2 derart angepasst werden, dass die vom jeweiligen Sensor 1, 2 zu erfassende Oberfläche des Messobjekts immer im Messbereich des betreffenden Sensors 1, 2 liegt. Um den Messbereich der Sensoren 1, 2 möglichst wenig zu reduzieren, könnte die Cut-Off/Cut-On-Wellenlänge auch mit größerem Überlapp gewählt werden. Allerdings ist dann die gegenseitige Beeinflussung der Sensoren 1, 2 - je nach Transparenz des Objekts - größer. Es ist daher im Einzelfall zu entscheiden, ob ein möglichst großer Messbereich - bei reduzierter Genauigkeit - oder eine möglichst geringe Beeinflussung - bei geringerem Messbereich - gewählt werden soll.

Die Sensoren 1, 2 könnten aber auch für die Verwendung mit den Filtern 3, 4 kalibriert werden. Dazu wird das im Sensor 1, 2 verwendete Spektrometer an den verwendeten Spektralbereich angepasst, wodurch eine optimale Ausnutzung des Spektrometers für den noch verbleibenden Spektralbereich erreicht wird.

Je nach Systemaufbau kann der Filter 3, 4 entweder im Bereich der Lichtquelle, des Lichtleiters oder - insbesondere bei der Verwendung von zwei Messsystemen - am Spektrometer oder Empfänger angebracht werden.

Eine integrierte Anordnung hat den Vorteil, dass eine kompakte, ab Werk abgeglichene Einheit zur Verfügung steht.

Der Filter 3, 4 könnte auch hinter der Austrittsoptik des Sensors 1, 2 angebracht werden. Das Anbringen des Filters 3, 4 an der Austrittslinse kann auch nachträglich erfolgen. Damit kann flexibel mit geeigneten Filterkombinationen der gewünschte Spektralbereich bzw. der Messbereich der Sensoren 1, 2 eingestellt werden.

Fig. 2 zeigt in einer beispielhaften Anordnung die Dickenmessung einer dünnen Glasplatte 5 mit 300 µm Dicke. Dazu werden zwei konfokal chromatische Sensoren 1, 2 gegenüberliegend derart angeordnet, dass ihre Strahlachsen konzentrisch angeordnet sind bzw. verlaufen. Dadurch liegen die beiden Messpunkte auf der Ober- bzw. Unterseite der Glasplatte 5 immer exakt übereinander und zwar ungeachtet der Position der Glasplatte im Messspalt zwischen den beiden Sensoren 1, 2. Damit hat auch eine geringe Verkippung der Glasplatte 5 nur einen minimalen Einfluss - dieser entsteht durch die einfach darzustellende geometrische Vergrößerung der Dicke aufgrund des Kippwinkels - auf das Messergebnis.

Bei dem hier dargestellten Ausführungsbeispiel werden Standard-Sensoren 1, 2 mit einem nominalen Messbereich von jeweils 3 mm verwendet. Vor dem Sensor 1 ist ein Cyan-Filter 3 mit der Transmissionskurve aus Fig. 1a angebracht. Dieser Filter 3 lässt nur Licht im Spektralbereich unter 600 nm durch. Dadurch wird der effektive Messbereich des Sensors 1 auf ca. 2,5 mm eingeschränkt. Vor dem Sensor 2 ist ein Rot-Filter 4 mit der Transmissionskurve aus Fig. 1b angebracht. Dieser Filter 4 lässt nur Licht im Spektralbereich oberhalb von 570 nm durch. Dadurch wird der effektive Messbereich des Sensors 2 auf ca. 1,0 mm eingeschränkt. Der Unterschied im resultierenden Messbereich liegt an der spektralen Empfindlichkeit des Spektrometers bzw. Empfängers und der zugehörigen Emissionscharakteristik der Weißlichtquelle in Verbindung mit der gewählten Filterkombination. Bei einer anderen Kombination des Filterpaars kann durch Wahl einer anderen Cut-On/Cut-Off-Wellenlänge eine andere Verteilung des jeweiligen Messbereichs erzielt werden.

Durch die gegenüberliegende Anordnung der Sensoren 1 und 2 würde ohne Verwendung von Filtern 3 und 4 Licht vom Sensor 1 direkt in den Sensor 2 gelangen und umgekehrt. Da Glas nahezu transparent ist, ist die Intensität des transmittierten Lichts um Größenordnungen höher als das für die eigentliche Messung reflektierte Licht. Da also das vom Sensor 1 emittierte und durch die Glasplatte 5 transmittierte Licht, das auf den Sensor 2 fällt, viel intensiver ist, als das vom Sensor 2 selbst emittierte, vom Glas reflektierte Licht, wird das Spektrometer des Sensors 2 vom Licht des Sensors 1 nahezu überstrahlt. Dadurch können die von der Reflexion am Glas auftretenden, zur Messung benötigten Peaks auf dem Spektrometer nicht oder nur sehr schwer detektiert werden.

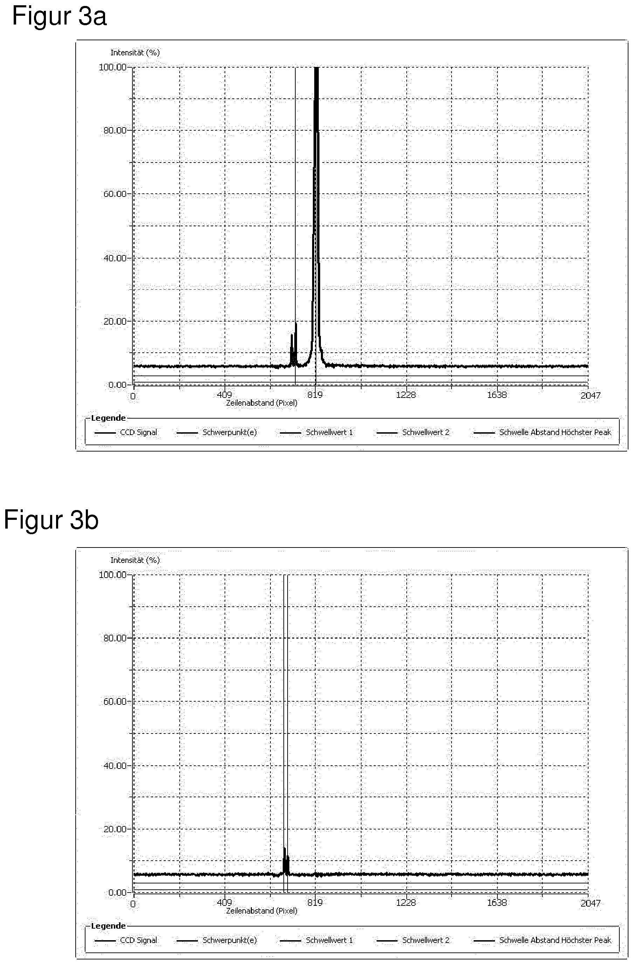

In den Fig. 3a bis 3d wird dieser oben erläuterte Überstrahlungseffekt anhand von gemessenen Spektren erläutert.

In Fig. 3a ist das am Spektrometer bzw. Empfänger des Sensors 1 gemessene Spektrum ohne Verwendung eines Filters dargestellt. Der prominente Peak bei ca. 820 wird durch den gegenüberliegenden Sensor 2 erzeugt. Dabei ist 820 die Pixel-Nummer des Spektrometers, wobei die Pixel mit niedriger Nummer einer kürzeren Wellenlänge und damit einem geringeren Abstand zum Sensor und Pixel mit höherer Nummer einer längeren Wellenlänge und einem größeren Abstand zum Sensor entsprechen. Die Intensität des Peaks bei ca. 820 ist größer als 100%. Die beiden schwächeren Peaks links daneben - bei ca. 700 - rühren von der Reflexion auf der Oberseite und Unterseite der Glasplatte 5 her. Diese beiden Mess-Peaks müssten eigentlich zur Abstandsmessung herangezogen werden. Dies wird jedoch durch den prominenten Haupt-Peak bei ca. 820 erschwert bzw. unmöglich gemacht, da mit diesem Peak das Spektrometer überstrahlt wird.

Fig. 3b zeigt dasselbe Spektrum bei Verwendung des Cyan-Filters 3 aus Fig. 1a. Deutlich ist zu erkennen, dass der störende Haupt-Peak vom gegenüberliegenden Sensor 2 wirksam geblockt wird, da der Filter 3 nur kurzwelligeres Licht durchlässt und das langwelligere Licht - entsprechend dem größeren Abstand vom Sensor 1 - abblockt. Gewissermaßen wird der Messbereich des Sensors 1 reduziert, indem die größeren Wellenlängen ausgeblendet werden und somit der Messbereich am Ende reduziert wird. Die für die Messung erforderlichen Mess-Peaks bei 700 können nun, bei entsprechender Einstellung des Sensors, leicht für die Abstandsmessung herangezogen werden.

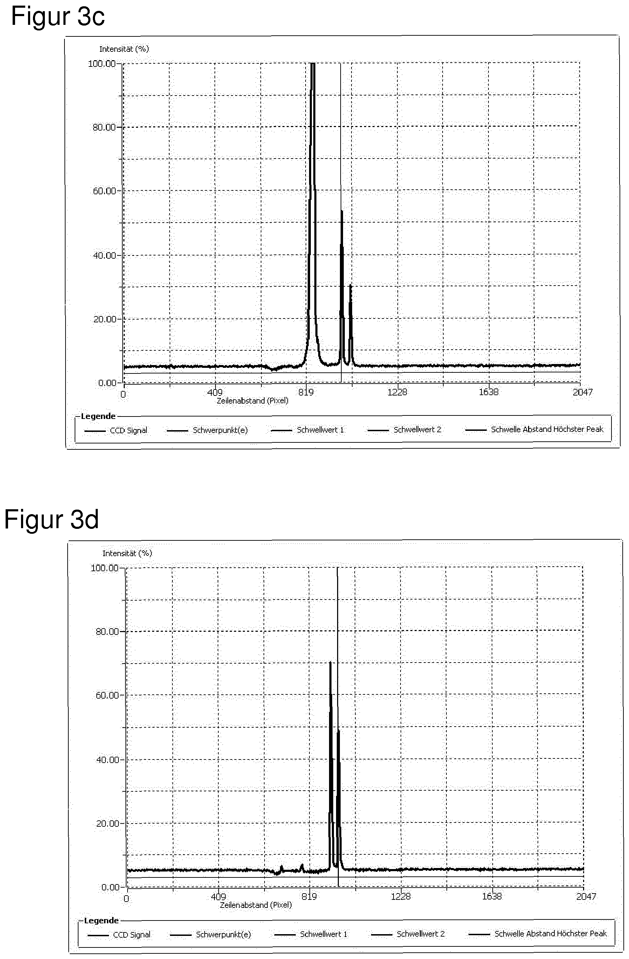

Die analoge Situation für Sensor 2 zeigen die Fig. 3c und 3d. Dabei ist in Fig. 3c das Spektrum ohne Filter dargestellt, wobei ein prominenter Stör-Peak bei ca. 820 vorliegt. Wie Fig. 3d zeigt, wird dieser durch Verwendung des Rot-Filters 4 vor dem Sensor 2 wirksam ausgeblendet. Das Ausblenden des Stör-Peaks durch geeignete Filter bedeutet letztendlich ein Einschränken des Messbereichs von Sensor 1 im kurzwelligeren Bereich und von Sensor 2 im langwelligeren Bereich.

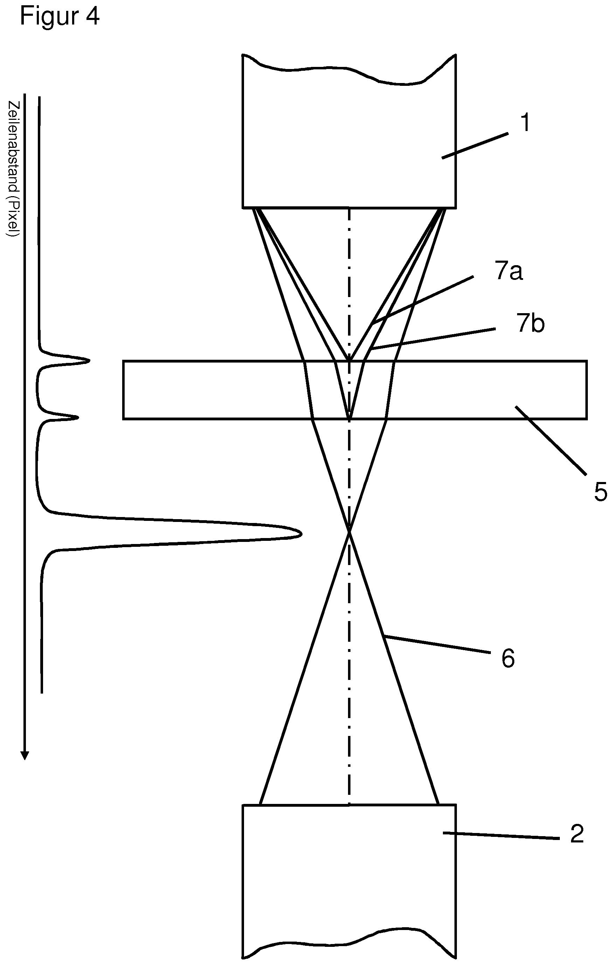

Der prominente Peak liegt sowohl beim Sensor 1 als auch beim Sensor 2 an nahezu derselben Stelle auf dem Spektrometer, wobei kleine Unterschiede aus Fertigungstoleranzen der Spektrometer rühren, so dass diese nicht auf absolute Wellenlängen geeicht sind. Dieser Peak entspricht genau einer bestimmten Wellenlänge, die nämlich - bei Abwesenheit eines Messobjekts - von beiden Sensoren detektiert werden kann. Für diese Wellenlänge trifft gerade die Bedingung zu, dass sie genau auf das Pinhole des gegenüberliegenden Sensors fokussiert ist. Bei Sensoren mit gleichem Messbereich entspricht diese Wellenlänge etwa dem halben Abstand der beiden Sensoren. Bei unterschiedlichen Messbereichen der Sensoren liegt der Fokus bei unterschiedlichen Abständen vor den Sensoren, so dass die Wellenlänge dieser jeweiligen Fokuslage entspricht. Veranschaulicht wird dies in Fig. 4. Dabei sind die beiden Sensoren 1 und 2 mit gleichem Messbereich und die geometrischen Strahlen entsprechend dem konfokal chromatischen Messprinzip dargestellt. Der Strahl 6 entspricht der Wellenlänge, die im Fokus beider Sensoren 1 und 2 liegt. Der Strahl 7a entspricht der Wellenlänge von Sensor 1, deren Fokus auf der Oberseite der Glasplatte 5 liegt. Der Strahl 7b entspricht der Wellenlänge von Sensor 1, deren Fokus auf der Unterseite der Glasplatte 5 liegt. Somit korrespondiert der Strahl 6 mit dem Hauptpeak bei 820 in Fig. 3a, der Strahl 7a mit dem linken der beiden Mess-Peaks und der Strahl 7b mit dem rechten der beiden Mess-Peaks in Fig. 3a. Das Spektrum aus Fig. 3a mit dem korrespondierenden Peak ist in Fig. 4 schematisch neben der Sensoranordnung gezeigt.

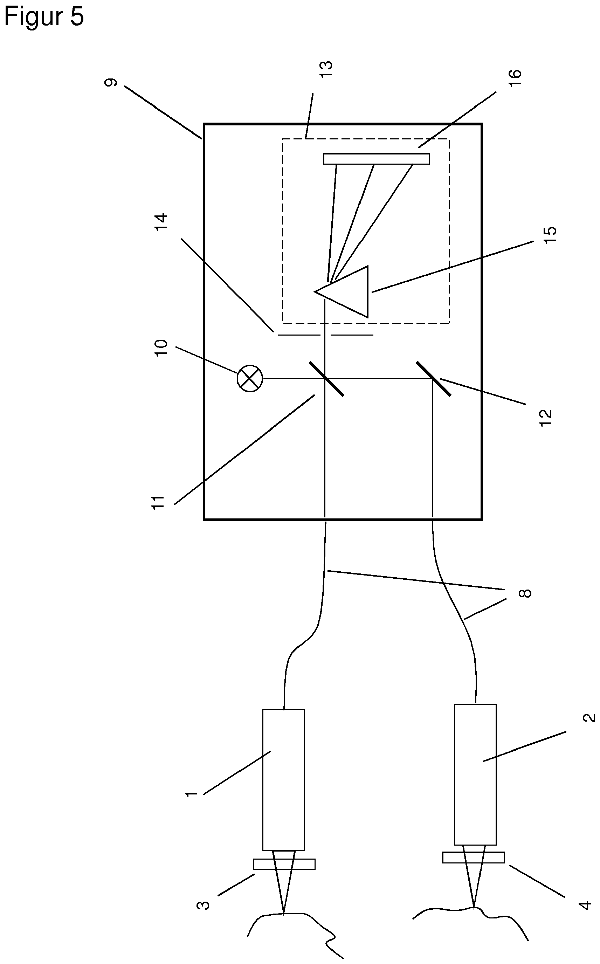

Fig. 5 zeigt die besonders vorteilhafte Ausführung eines Mehrkanal-Messsystems. Der Einfachheit und Übersichtlichkeit halber ist das Beispiel anhand einer zweikanaligen Ausführung erläutert.

Das Messsystem besteht aus zwei Sensoren 1 und 2, die jeweils über einen Lichtleiter 8 mit dem Controller 9 verbunden sind. Der Controller 9 beinhaltet die Lichtquelle 10, einen halbdurchlässigen Spiegel 11 sowie einen Umlenkspiegel 12 und das Spektrometer 13. Das Licht der Lichtquelle 10 wird über den halbdurchlässigen Spiegel 11 und den Umlenkspiegel 12 auf die beiden Sensoren 1 und 2 verteilt. Das vom Objekt zurückreflektierte Licht wird von den Sensoren empfangen und über Lichtleiter 8 und den halbdurchlässigen Spiegel 11 auf das Spektrometer 13 abgebildet. Vor dem Spektrometer sitzt eine Blende 14, die jeweils nur Licht derjenigen Wellenlänge auf das Spektrometer abbildet, das von der Oberfläche des Messobjektes fokussiert zurückreflektiert wird. Das Licht wird im Spektrometer 13 mittels eines diffraktiven oder dispersiven Elementes, beispielsweise eines Prismas 15, in Abhängigkeit von seiner Wellenlänge abgelenkt und auf die Zeile 16 abgebildet. Ohne Filter 3, 4 würde sich das Licht der beiden Sensoren am Spektrometer 13 überlagern, so dass eine Zuordnung auf den jeweiligen Sensor nicht möglich wäre. Setzt man jetzt Filter 3, 4 in den Strahlengang der Sensoren, dann wird der Spektralbereich auf die Sensoren aufgeteilt. Bei einer hälftigen Aufteilung trifft somit das Licht von Sensor 1 auf eine Hälfte der Zeile 16 und von Sensor 2 auf die andere Hälfte der Zeile 16. Aber auch eine andere Aufteilung ist denkbar. Da durch die geeignete Auswahl der Filter 3, 4 die Aufteilung des Spektralbereiches bekannt ist und damit auch die Aufteilung auf der Zeile, kann jeder Peak auf der Zeile eindeutig einem Sensor 1, 2 zugeordnet werden. Wertet man das Signal der Zeile 16 mit den bekannten Methoden aus, erhält man also zur gleichen Zeit zwei unabhängige Signale der beiden Sensoren 1,2, wodurch eine gegenseitige Beeinflussung vermieden wird. Auf diese Weise lässt sich mit dieser Anordnung an zwei unabhängigen Messstellen ein Abstandsmesswert ermitteln bzw. ist eine gleichzeitige Dickenmessung an gegenüberliegenden Stellen eines Objekte möglich. Da die gegenseitige Beeinflussung ausgeschaltet ist, können auf diese Weise sogar die Dicke transparenter oder opaquer Objekte vermessen werden.

Eine Ausweitung auf mehr als zwei Sensoren geschieht in ganz analoger Weise. Durch das Hintereinanderschalten mehrere halbdurchlässiger Spiegel könnte das Licht mehrerer Sensoren zusammengefasst und auf das Spektrometer abgebildet werden.

Hinsichtlich weiterer vorteilhafter Ausgestaltungen der erfindungsgemäßen Vorrichtung und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dient, dieser jedoch nicht auf das Ausführungsbeispiel einschränkt.

### Bezugszeichenliste

- 1: Sensor
- 2: Sensor
- 3: Cyan-Filter
- 4: Rot-Filter
- 5: Glasplatte
- 6: Strahl
- 7a: Strahl
- 7b: Strahl
- 8: Lichtleiter
- 9: Controller
- 10: Lichtquelle
- 11: Halbdurchlässiger Spiegel
- 12: Umlenkspiegel
- 13: Spektrometer
- 14: Blende
- 15: Prisma
- 16: CMOS-Zeile

## Patentansprüche

1. Vorrichtung zur Abstands- oder Dickenmessung eines Objekts (5), mit mindestens zwei optischen Abstandssensoren (1, 2), die zur Emission von Licht einer Lichtquelle (10) ausgebildet sind und denen ein Empfänger für vom Objekt (5) reflektiertes Licht zugeordnet ist, wobei eine Abstands- oder Dickenbestimmung anhand der durch die Abstandssensoren (1, 2) ermittelten Abstände zwischen den Abstandssensoren (1, 2) und dem Objekt (5) erfolgt und wobei die Abstandssensoren (1, 2) derartige Mittel aufweisen, dass von den Abstandssensoren (1, 2) emittiertes Licht nicht oder nur abgeschwächt auf den Empfänger des jeweils anderen Abstandssensors (2, 1) gelangt oder nicht oder nur abgeschwächt von diesem Empfänger verarbeitet wird,
**dadurch gekennzeichnet, dass** die Mittel derart ausgebildet sind, dass das durch die Abstandssensoren (1, 2) emittierte Licht durch die Mittel derart spektral aufgespalten oder aufgeteilt wird, dass höchstens ein Teilbereich des Wellenlängenspektrums des von einem Abstandssensor (1, 2) emittierten Lichts auf den Empfänger des jeweils anderen Abstandssensors (2, 1) gelangt.

2. Vorrichtung nach Anspruch 1, **dadurch gekennzeichnet, dass** die Abstandssensoren (1, 2) jeweils eine Lichtquelle zur Emission von Licht und jeweils einen Empfänger für vom Objekt reflektiertes Licht aufweisen, wobei vorzugsweise die Abstandssensoren (1, 2) auf zwei Seiten des Objekts (5) - einander gegenüberliegend - angeordnet sind.

3. Vorrichtung nach Anspruch 1, **dadurch gekennzeichnet, dass** die spektrale Aufspaltung oder Aufteilung derart realisiert ist, dass bei jedem Abstandssensor (1, 2) ein in etwa gleich großer Abstands- oder Dickenmessbereich nutzbar ist.

4. Vorrichtung nach einem der Ansprüche 1 bis 3, **dadurch gekennzeichnet, dass** eine Empfangszeile, vorzugsweise eine CCD- oder CMOS-Zeile, des Empfängers bereichsweise maskiert ist.

5. Vorrichtung nach Anspruch 4, **dadurch gekennzeichnet, dass** die Maskierung mittels einer Blende realisiert ist.

6. Vorrichtung nach einem der Ansprüche 1 bis 5, **dadurch gekennzeichnet, dass** mindestens ein Pixel in einem vorgebbaren Bereich einer Empfangszeile, vorzugsweise eine CCD- oder CMOS-Zeile, des Empfängers deaktiviert oder nicht zu einer Verarbeitung oder Auswertung herangezogen ist.

7. Vorrichtung nach einem der Ansprüche 1 bis 6, **dadurch gekennzeichnet, dass** eine Empfangszeile, vorzugsweise eine CCD- oder CMOS-Zeile, des Empfängers derart innerhalb des Empfängers verschiebbar oder anordenbar ist, dass das von einem dispersiven Element aufgespaltene oder aufgeteilte Licht nur auf einen Teilbereich der Empfangszeile gelangt.

8. Vorrichtung nach einem der Ansprüche 1 bis 7, **dadurch gekennzeichnet, dass** die Abstandssensoren (1, 2) unterschiedliche Lichtquellen aufweisen, die jeweils Licht unterschiedlicher Wellenlänge oder Wellenlängenbereiche emittieren.

9. Vorrichtung nach einem der Ansprüche 1 bis 8, **dadurch gekennzeichnet, dass** die Mittel durch mindestens einen den Lichtquellen oder einem lichtleitenden Element der Abstandssensoren (1, 2) zugeordneten, vorzugsweise unmittelbar vor der Austrittsoptik der Abstandssensoren (1, 2) angeordneten, Spektral-, Kanten- und/oder Bandpassfilter (3, 4) realisiert sind.

10. Vorrichtung nach einem der Ansprüche 1 bis 9, **dadurch gekennzeichnet, dass** die Abstandssensoren (1, 2) nebeneinander angeordnet sind, wobei vorzugsweise das Licht einer Lichtquelle (10) auf alle Abstandssensoren (1, 2) verteilt ist.

11. Verfahren zur Abstands- oder Dickenmessung eines Objekts (5), insbesondere mit einer Vorrichtung nach einem der Ansprüche 1 bis 10, mit mindestens zwei optischen Abstandssensoren (1, 2), die zur Emission von Licht einer Lichtquelle (10) ausgebildet sind und denen ein Empfänger für vom Objekt (5) reflektiertes Licht zugeordnet ist, wobei eine Abstands- oder Dickenbestimmung anhand der durch die Abstandssensoren (1, 2) ermittelten Abstände zwischen den Abstandssensoren (1, 2) und dem Objekt (5) erfolgt und wobei von den Abstandssensoren (1, 2) emittiertes Licht nicht oder nur abgeschwächt auf den Empfänger des jeweils anderen Abstandssensors (2, 1) geführt oder nicht oder nur abgeschwächt von diesem Empfänger verarbeitet wird,
**dadurch gekennzeichnet, dass** das durch die Abstandssensoren (1, 2) emittierte Licht durch Mittel derart spektral aufgespalten oder aufgeteilt wird, dass höchstens ein Teilbereich des Wellenlängenspektrums des von einem Abstandssensor (1, 2) emittierten Lichts auf den Empfänger des jeweils anderen Abstandssensors (2, 1) gelangt.

## Claims

1. Device for distance or thickness measurement of an object (5), having at least two optical distance sensors (1, 2) which are constructed to emit light of a light source (10) and with which a receiver for light reflected by the object (5) is associated, wherein a distance or thickness determination is carried out with reference to the distances established by the distance sensors (1, 2) between the distance sensors (1, 2) and the object (5), and wherein the distance sensors (1, 2) have such means that light emitted by the distance sensors (1, 2) reaches the receiver of the other distance sensor (2, 1) in each case only in a weakened manner or not at all or is processed by this receiver only in a weakened manner or not at all,
**characterised in that** the means are constructed in such a manner that the light emitted by the distance sensors (1, 2) is spectrally split or divided by the means in such a manner that a maximum of a part-region of the wavelength spectrum of the light emitted by a distance sensor (1, 2) reaches the receiver of the other distance sensor (2, 1).

2. Device according to claim 1, **characterised in that** the distance sensors (1, 2) each have a light source for emitting light and a receiver for light reflected by the object, wherein the distance sensors (1, 2) are preferably arranged - opposite each other - at two sides of the object (5).

3. Device according to claim 1, **characterised in that** the spectral splitting or division is produced in such a manner that for each distance sensor (1, 2) a distance or thickness measurement region of approximately the same size can be used.

4. Device according to any one of claims 1 to 3,
**characterised in that** a receiving line, preferably a CCD or CMOS line, of the receiver is partially masked.

5. Device according to claim 4, **characterised in that** the masking is produced by means of an aperture.

6. Device according to any one of claims 1 to 5,
**characterised in that** at least one pixel in a predeterminable region of a receiving line, preferably a CCD or CMOS line, of the receiver is deactivated or is not used for processing or evaluation.

7. Device according to any one of claims 1 to 6,
**characterised in that** a receiving line, preferably a CCD or CMOS line, of the receiver can be displaced or arranged inside the receiver in such a manner that the light split or divided by a dispersive element reaches only a part-region of the receiving line.

8. Device according to any one of claims 1 to 7,
**characterised in that** the distance sensors (1, 2) have different light sources which each emit light of different wavelengths or wavelength ranges.

9. Device according to any one of claims 1 to 8,
**characterised in that** the means are produced by means of at least one spectral, edge and/or bandpass filter (3, 4) which is/are associated with the light sources or a light-conducting element of the distance sensors (1, 2) and which is/are preferably arranged directly in front of the optical outlet unit of the distance sensors (1, 2).

10. Device according to any one of claims 1 to 9,
**characterised in that** the distance sensors (1, 2) are arranged beside each other, wherein the light of a light source (10) is preferably distributed over all the distance sensors (1, 2).

11. Method for distance or thickness measurement of an object (5), in particular using a device according to any one of claims 1 to 10, having at least two optical distance sensors (1, 2) which are constructed to emit light of a light source (10) and with which a receiver for light reflected by the object (5) is associated, wherein a distance or thickness determination is carried out with reference to the distances established by the distance sensors (1, 2) between the distance sensors (1, 2) and the object (5), and wherein light emitted by the distance sensors (1, 2) is guided to the receiver of the other distance sensor (2, 1) in each case only in a weakened manner or not at all or is processed by this receiver only in a weakened manner or not at all, **characterised in that** the light emitted by the distance sensors (1, 2) is spectrally split or divided by means in such a manner that a maximum of a part-region of the wavelength spectrum of the light emitted by a distance sensor (1, 2) reaches the receiver of the other distance sensor (2, 1).

## Revendications

1. Dispositif de mesure de distance ou d'épaisseur d'un objet (5) avec au moins deux capteurs de distances optiques (1, 2) qui sont conçus pour l'émission de lumière d'une source de lumière (10) et auxquels correspond un récepteur pour la lumière réfléchie par l'objet (5), une détermination de la distance ou de l'épaisseur étant effectuée à l'aide des distances entre les capteurs de distances (1, 2) et l'objet (5), déterminées par les capteurs de distances (1, 2) et les capteurs de distances (1, 2) comprenant des moyens permettant de faire en sorte que la lumière émise par les capteurs de distances (1, 2) n'arrive pas ou seulement faiblement jusqu'au récepteur de l'autre capteur de distance (2, 1) ou ne soit pas traitée ou seulement faiblement par ce récepteur,
**caractérisé en ce que** les moyens sont conçus de façon à ce que la lumière émise par les capteurs de distances (1, 2) soit décomposée ou répartie de manière spectrale par les moyens de façon à ce qu'au maximum une partie du spectre de longueurs d'ondes de la lumière émise par un capteur de distance (1, 2) arrive jusqu'au récepteur de l'autre capteur de distance (2, 1) correspondant.

2. Dispositif selon la revendication 1, **caractérisé en ce que** les capteurs de distances (1, 2) comprennent chacun une source de lumière pour l'émission de lumière et chacun un récepteur pour la lumière réfléchie par l'objet, de préférence les capteurs de distances (1, 2) étant disposés sur deux côtés de l'objet (5), l'un en face de l'autre.

3. Dispositif selon la revendication 1, **caractérisé en ce que** la décomposition ou répartition spectrale soit réalisée de façon à ce que, pour chaque capteur de distance (1, 2), une zone de mesure de distance ou d'épaisseur ayant approximativement la même taille puisse être utilisée.

4. Dispositif selon l'une des revendications 1 à 3, **caractérisé en ce qu'**une cellule de réception, de préférence une cellule CCD ou CMOS, du récepteur, est masquée par endroits.

5. Dispositif selon la revendication 4, **caractérisé en ce que** le masquage est réalisé au moyen d'un diaphragme.

6. Dispositif selon l'une des revendications 1 à 5, **caractérisé en ce qu'**au moins un pixel dans une zone, pouvant être prédéterminée, d'une cellule de réception, de préférence une cellule CCD ou CMOS, du récepteur, est désactivé ou n'est pas utilisé pour un traitement ou une analyse.

7. Dispositif selon l'une des revendications 1 à 6, **caractérisé en ce qu'**une cellule de réception, de préférence une cellule CCD ou CMOS, du récepteur, peut être déplacée ou disposée à l'intérieur du récepteur de façon à ce que la lumière décomposée ou répartie par un élément dispersif arrive seulement sur une partie de la cellule de réception.

8. Dispositif selon l'une des revendications 1 à 7, **caractérisé en ce que** les capteurs de distances (1, 2) comprennent différentes sources de lumière, qui émettent chacune une longueur d'onde ou une plage de longueurs d'ondes différente.

9. Dispositif selon l'une des revendications 1 à 8, **caractérisé en ce que** les moyens sont constitués d'au moins un filtre spectral, un filtre de bord et/ou un filtre passe-bande (3, 4) correspondant aux sources de lumière ou à un élément conducteur de lumière des capteurs de distances (1, 2), disposés de préférence immédiatement avant l'optique de sortie des capteurs de distances (1, 2).

10. Dispositif selon l'une des revendications 1 à 9, **caractérisé en ce que** les capteurs de distances (1, 2) sont disposés les uns à côté des autres, de préférence la lumière d'une source de lumière (10) étant répartie sur tous les capteurs de distances (1, 2).

11. Procédé de mesure de distance ou d'épaisseur d'un objet (5), plus particulièrement avec un dispositif selon l'une des revendications 1 à 10, avec au moins deux capteurs de distances optiques (1, 2) qui sont conçus pour l'émission de lumière d'une source de lumière (10) et auxquels correspond un récepteur pour la lumière réfléchie par l'objet (5), une détermination de la distance ou de l'épaisseur étant effectuée à l'aide des distances entre les capteurs de distances (1, 2) et l'objet (5), déterminées par les capteurs de distances (1, 2) et la lumière émise par les capteurs de distances (1, 2) n'arrivant pas ou seulement faiblement jusqu'au récepteur de l'autre capteur de distance (2, 1) ou n'étant pas traitée ou seulement faiblement par ce récepteur,
**caractérisé en ce que** la lumière émise par les capteurs de distances (1, 2) est décomposée ou répartie de manière spectrale par les moyens de façon à ce qu'au maximum une partie du spectre de longueurs d'ondes de la lumière émise par un capteur de distance (1, 2) arrive jusqu'au récepteur de l'autre capteur de distance (2, 1) correspondant.
